# EUROPÄISCHE PATENTSCHRIFT

(11) **EP 2 598 227 B1**
(45) Veröffentlichungstag und Bekanntmachung des Hinweises auf die Patenterteilung: **11.01.2017**
(21) Anmeldenummer: 11743488.6
(22) Anmeldetag: 26.07.2011
(51) Int. Cl.: B01D 46/00, B01D 46/52, C09J 167/02, C09J 177/00

(54) **FILTERELEMENT UND VERFAHREN ZUR HERSTELLUNG EINES FILTERELEMENTS**
FILTER ELEMENT AND PROCESS FOR PRODUCING A FILTER ELEMENT
ÉLÉMENT FILTRANT ET PROCÉDÉ DE FABRICATION D'UN ÉLÉMENT FILTRANT

(30) Priorität: 26.07.2010 DE 102010032295
(43) Veröffentlichungstag der Anmeldung: 05.06.2013
(73) Patentinhaber: Mann + Hummel GmbH, 71638 Ludwigsburg (DE)
(72) Erfinder: MBADINGA-MOUANDA, Gelase, 5300 Laval (FR); MAJER, Tanja, 74379 Ingersheim (DE); GEHWOLF, Klaus, 94437 Mamming (DE)
(74) Vertreter: Seyboth, Matthias
(86) Internationale Anmeldenummer: PCT/EP2011/062781
(87) Internationale Veröffentlichungsnummer: WO 2012/013647

(56) Entgegenhaltungen:
- WO-A2-99/35189
- DE-A1- 10 015 951
- DE-A1- 10 113 077
- DE-B- 1 299 230
- US-A- 4 217 435

## Beschreibung

### Technisches Gebiet

Die Erfindung betrifft ein Filterelement und ein Verfahren zu dessen Herstellung.

### Stand der Technik

Aus der DE 1299230 ist ein Filter bekannt, dessen Falten mittels einzelner Schmelzklebstoffpunkte verbunden sind.

Bei derartigen Filterelementen besteht das Problem, dass sich bei der Applikation der Schmelzklebstoffe, insbesondere bei einem spurförmigem Auftrag mit länglichen, mehrfach unterbrochenen Schmelzklebstoffspuren oder bei punktförmigem Auftrag, z. B. mittels Auftragsdüsen, Auftragsrollen usw., zwischen dem Auftragsequipment und den Enden der Schmelzklebstoffspuren Schmelzklebstofffäden ausbilden, die erkalten und aushärten und im Auftragsbereich am Filter verbleiben. Dies kann insbesondere bei einer Verklebung auf der Reinseite der Filterelemente nachteilig sein, da sich im Betrieb Stücke von erkalteten Schmelzklebstofffäden ablösen und vom Fluidstrom mitgerissen werden können. Dies kann insbesondere bei der Filtration von Ansaugluft von Brennkraftmaschinen von Nachteil sein.

Zum Verkleben von zickzackförmig gefalteten Filterelementen werden regelmäßig Schmelzklebstoffe verwendet. Nicht reaktive Schmelzklebstoffe sind Produkte, die lösungsmittelfrei und bei Raumtemperatur mehr oder weniger feste sind und im heißen Zustand auf eine Klebefläche aufgetragen werden und beim Abkühlen die Klebeverbindung herstellen. Diese Gruppe von Klebstoffen ist auch als Hotmelt bekannt und basiert auf verschiedenen chemischen Rohstoffen. DIN EN 923 definiert Schmelzklebstoff als eine thermisch aufschmelzbares Klebesystem, das nach der Abkühlung Kohäsion entwickelt. Schmelzpunkte liegen meist zwischen 80°C und 250°C. Aus dem Stand der Technik sind verschiedene nicht reaktive Schmelzklebstoffe auf Basis von Polyestern oder Polyamiden bekannt, zum Beispiel Macromelt 2030, 6208 von Henkel, WEVO T570, P 165 von WEVO Chemie oder TH 207, TH 111 von Bostik. Aus MÜLLER UND RATH: Formulierung von Kleb- und Dichtstoffen. Hannover: Vincentz Network, 2004 sind weitere Schmelzklebstoffe bekannt. Beim Auftrag der Schmelzklebstoffe entstehen regelmäßig, insbesondere bei der Unterbrechung des Auftrags mittels Auftragsdüsen, Klebstofffäden, die sich zwischen dem aufgetragenen Klebstoff und einer Auftragsdüse bilden und gegebenenfalls abreißen (Fadenzug).

Der Erfindung liegt die Aufgabe zugrunde, ein mittels in regelmäßig oder unregelmäßig unterbrochener Spurform aufgetragenem Schmelzklebstoff verklebtes Filterelement mit einer geringeren Menge an Schmelzklebstofffäden und ein Verfahren zu dessen Herstellung bereitzustellen.

### Offenbarung der Erfindung

Die Aufgabe wird gelöst durch ein Filterelement, insbesondere zur Filtration von Gasen und Flüssigkeiten, insbesondere für die Filtration von Ansaugluft oder Kraftstoff oder Öl von Brennkraftmaschinen oder zur Filtration von Bearbeitungsflüssigkeiten von Metallbearbeitungsmaschinen, insbesondere Erodiermaschinen, umfassend einen zickzackförmig gefalteten, aus einem flachen Filtermedium gebildeten Filterbalg. Der Filterbalg kann als rechteckförmiger, zickzackförmiger Filterbalg oder als ringförmig angeordneter, sternförmig gefalteter Filterbalg ausgebildet sein. Alternativ kann ein wechselseitig verschlossene Kanäle ausbildendes Filtermedium verwendet werden, wobei der Filterbalg durch Aufwickeln und Aneinanderkleben eines zwei Filtermedienlagen umfassenden Halbzeugs gebildet ist, welches eine Glattlage und eine darauf angeordnete Welllage umfasst.

Das Filterelement ist erfindungsgemäß durch mindestens zwei, insbesondere regelmäßig oder unregelmäßig unterbrochene Klebstoffspuren

Das Filterelement ist erfindungsgemäß durch aus einem Schmelzklebstoffsystem verklebt. Die Klebstoffspuren verlaufen insbesondere senkrecht zu den Faltkanten auf dem Filtermedium, können jedoch auch in einem Winkel zu den Faltkanten angeordnet sein. Analog ist bei dem durch Glatt- und Welllage gebildeten Filterelement zwischen Glatt- und Welllage des Halbzeugs und/oder zwischen den beim Aufwickeln in Kontakt kommenden Glatt- und Welllage mindestens eine insbesondere mindestens zwei, insbesondere regelmäßig oder unregelmäßig unterbrochene Klebstoffspuren aus einem Schmelzklebstoffsystem angeordnet. Erfindungsgemäß umfasst das Schmelzklebstoffsystem eine Schmelzklebstoffmischung, die Schmelzklebstoffmischung umfassend 15-85 Gewichts-%, insbesondere 30-70 Gewichts-% eines ersten Schmelzklebstoffes, der Polyester basiert ist, und 15-85 Gewichts-%, insbesondere 30-70 Gewichts-% eines zweiten Schmelzklebstoffes, der Polyamid basiert ist, gelöst.

Erfindungsgemäß ergeben die Gewichtsanteile des ersten und des zweiten Schmelzklebstoffes zusammen 100 Gewichts-% der Schmelzklebstoffmischung.

Dabei hat die Schmelzklebstoffmischung einen Anteil von 75-100 Gewichts-% (vorzugsweise nahezu oder genau 100 Gewichts-%) an dem Schmelzklebstoffsystem, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist.

Als Filtermedien können beispielsweise Zellulosemedien, Medien aus schmelzgeblasenen Fasern, Faservliese oder in Schichten aufgebaute Kombinationen daraus zum Einsatz kommen.

Es wurde überraschend festgestellt, dass bei Verwendung des genannten Schmelzklebstoffsystems ein mittels unterbrochener Schmelzklebstoffspuren verklebtes Filterelement hergestellt werden kann, welches im Vergleich zu anderen derartigen Filterelementen eine deutlich geringere Anzahl von Schmelzklebstofffäden aufweist.

In einer Ausführungsform umfasst das Filterelement ein zickzackförmig gefaltetes Filtermedium, welches eine Rohseite von einer Reinseite trennt und abwechselnd Faltenspitzen und Faltengründe aufweist, wobei in den Faltenzwischenräumen insbesondere längliche Klebstoffspuren angeordnet sind, welche sich alternierend zwischen Faltenspitzen und Faltengründen erstrecken, wobei auf der Rohseite und bevorzugt insbesondere auch auf der Reinseite des Filtermediums jeweils mindestens zwei Klebstoffspuren zueinander parallel und senkrecht zu der Richtung der Faltkanten auf dem Filterelement angeordnet sind, wobei die Klebstoffspuren auf der Rohseite und/oder der Reinseite in regelmäßigen Abständen unterbrochen sind.

Als länglich werden Schmelzklebstoffspuren bezeichnet, deren Länge in Auftragsrichtung 5-mal länger, bevorzugt 10-mal länger als deren Breite ist.

In einer Ausführungsform umfassen die Schmelzklebstoffspuren insbesondere regelmäßig beabstandete punktförmig aufgetragene Schmelzklebstoffpunkte auf.

In einer Ausführungsform umfassen die Schmelzklebstoffspuren längliche, durchgehend aufgetragene Abschnitte, die insbesondere regelmäßig von Durchbrechungen unterbrochen sein können.

In einer Ausführungsform sind die Anfangs- und Endpunkte der Unterbrechungen der Klebstoffspuren an einer Mehrzahl von Geraden ausgerichtet, welche zueinander parallel verlaufen und mit den Faltkanten einen Winkel von 10-80°, bevorzugt 45 +/-15° bilden.

In einer Ausführungsform weisen die Klebstoffspuren reinseitig und/oder rohseitig eine Unterbrechung der Klebstoffspur auf, welche die reinseitige bzw. rohseitige Faltenspitze umgibt.

In einer Ausführungsform weisen die Klebstoffspuren reinseitig und/oder rohseitig eine Unterbrechung der Klebstoffspur auf, welche den reinseitigen bzw. rohseitigen Faltengrund umgibt.

In einer Ausführungsform liegen mindestens eine, bevorzugt alle Klebstoffspuren, auf der Rohseite einer/den Klebstoffspur(en) auf der Reinseite direkt gegenüber.

In einer Ausführungsform überschneiden sich die Unterbrechungen der sich gegenüberliegenden Klebstoffspuren auf der Rohseite und der Reinseite nicht.

In einer Ausführungsform verlaufen die Anfangs- und Endpunkte der Unterbrechungen der Klebstoffspuren an mindestens zwei Geradenscharen, wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen der Klebstoffspur auf dem Filtermedium gebildet wird.

In einer Ausführungsform werden die Anfangs- und Endpunkte der Unterbrechungen der Klebstoffspuren anstatt durch Geradenscharen durch Kurvenscharen definiert, wobei die Kurven insbesondere dieselbe Form haben, jedoch in einer Richtung senkrecht (+/- 30°) zu den Faltkanten zueinander verschoben sind.

In einer Ausführungsform umfasst die Kurvenschar Kreis- oder Ellipsenabschnitte, Sinusformen oder sonstige regelmäßige Schwingungsformen.

In einer Ausführungsform ist der Abstand zwischen zwei aufeinanderfolgenden Unterbrechungen, d.h. die Länge eines durchgehenden Klebstoffspurabschnitts länger als mindestens eine, bevorzugt beide an den durchgehenden Klebstoffspurabschnitt anschließenden Unterbrechungen.

In einer Ausführungsform beträgt die Länge mindestens einer Unterbrechung, insbesondere von zwischen Faltenspitze und Faltengrund liegenden Unterbrechungen 5-20 mm, bevorzugt 20-40 mm, alternativ 40-60 mm.

In einer Ausführungsform beträgt die Länge durchgehender Klebstoffabschnitte mindestens 5-20 mm, bevorzugt 20-40 mm, alternativ größer 40 mm.

Vorteilhaft sind die Maße der Unterbrechungen und der durchgehenden Klebstoffabschnitte so gewählt, dass eine ausreichende Stabilität des Filtermediums erreicht und vorteilhaft gleichzeitig eine Kommunikation zwischen den durch die Klebstoffspuren getrennten Faltenabschnitten ermöglicht wird.

In einer Ausführungsform umfasst das Filterelement einen zickzackförmig gefalteten Filterbalg, der zwei senkrecht zu den Faltkanten angeordnete Stirnseiten hat, die mittels verklebter oder verschweißter Endscheiben, einer Vergussmasse (insbesondere geschäumtes Polyurethan) oder einer durchgehenden Schmelzklebstoffspur dichtend verschlossen sind, wobei das Filterelement im Bereich zwischen den Stirnseiten durch mindestens eine, insbesondere mindestens zwei, insbesondere regelmäßig oder unregelmäßig unterbrochene Klebstoffspuren aus einem Schmelzklebstoffsystem verklebt ist.

Das Filterelement ist dabei in einer Ausführungsform als ringförmiges Filterelement mit ringförmigen Endscheiben ausgebildet, wobei eine der Endscheiben bevorzugt geschlossen ausgeführt ist und die zweite Endscheibe eine innere Fluidströmungsöffnung aufweist, um welche eine axiale oder radiale Dichtung zur Abdichtung gegenüber einem Gehäusefluidkanal, insbesondere dem Auslasskanal bei einer Durchströmung von radial außen nach innen, angeordnet ist.

In einer anderen Ausführungsform weist das Filterelement eine rechteckige Form mit einer rohseitigen Anströmseite und einer reinseitigen Abströmseite auf. Das Filterelement wird durch ein mehrfach gefaltetes Filtermedium gebildet, wobei sich die Falten zwischen der Anströmseite und der Abströmseite erstrecken, d. h. es befinden sich jeweils Faltenspitzen auf der Anströmseite und der Abströmseite. Die nicht durchströmten Seitenflächen des Filterelements sind insbesondere von einem Polyestervlies umgeben, welches auf seiner dem Filterelement zugewandten Seite mit einer insbesondere mit dem erfindungsgemäßen Schmelzklebstoff gebildeten Schmelzklebstoffschicht versehen ist. Diese Schmelzklebstoffschicht stellt eine flächige Verklebung des Polyestervlieses mit dem Filterelement her, wobei auch die Stirnseiten des Filterbalges abgedichtet werden.

In einer Ausführungsform umfasst das Filterelement einen Hauptrahmen und einen Hilfsrahmen, wobei der Hauptrahmen eine axiale Dichtung trägt, welche in Richtung der Abströmseite dichtet und in eine Nut des Hauptrahmens oder in eine Nut zwischen Hauptrahmen und Seitenflächen eingebracht ist.

Der Hilfsrahmen ist vorteilhaft in einer Ausführungsform mit den Seitenflächen durch eine Klebeverbindung verbunden und weist radiale Flächen und/oder axiale Flächen zur Abstützung des Filterelements in einem Filtergehäuse auf.

In einer Ausführungsform ist auf den nicht durchströmten Seitenflächen des Filtermediums ein Kunststoffrahmen mittels einer insbesondere mit dem erfindungsgemäßen Schmelzklebstoff gebildeten Schmelzklebstoffverbindung aufgebracht, wobei auf den Stirnseiten durch den Schmelzklebstoff auch die Abdichtung der Stirnseite erfolgt.

Auf den Endseiten und/oder den Stirnseiten sind in einer Ausführungsform Öffnungen in den Kunststoffrahmen eingebracht.

In einer Ausführungsform trägt der Kunststoffrahmen auf der Anströmseite eine axiale Dichtung, welche mit einer Dichtfläche eines Filtergehäuses zur Abdichtung zwischen Rohseite und Reinseite in Verbindung bringbar ist.

In einer Ausführungsform ist ein Griff vorgesehen, welcher mit dem Kunststoffrahmen in Verbindung steht und zur besseren Handhabung des Filterelements dient.

Die Aufgabe wird ferner gelöst durch ein Verfahren zur Herstellung eines Filterelementes, das Verfahren umfassend die Schritte:
a. Aufschmelzen einer Schmelzklebstoffmischung, insbesondere in einem Extruder, die Schmelzklebstoffmischung umfassend
   i. 15-85 Gewichts-% eines ersten Schmelzklebstoffes, der Polyester basiert ist,
   ii. 15-85 Gewichts-% eines zweiten Schmelzklebstoffes, der Polyamid basiert ist,
   wobei die Gewichtsanteile des ersten und des zweiten Schmelzklebstoffes zusammen 100 Gewichts-% der Schmelzklebstoffmischung ergeben,
   wobei die Schmelzklebstoffmischung einen Anteil von mehr als 75 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist,
b. insbesondere dynamisches Mischen der beiden Schmelzklebstoffe, insbesondere unter Erzeugung von Scherkräften in der Schmelze, insbesondere in einem Extruder,
c. Applikation der geschmolzenen Schmelzklebstoffmischung auf ein bahnförmiges Filtermedium in insbesondere regelmäßig oder unregelmäßig unterbrochenen Klebstoffspuren,
d. Falten des Filtermediums unter gleichzeitigem Verkleben der Falten durch die applizierte Schmelzklebstoffmischung.

Dies hat den Vorteil, dass ein mittels Schmelzklebstoff verklebtes Filterelement hergestellt werden kann, welches im Vergleich zu anderen bekannten mittels Schmelzklebstoff verklebten Filterelementen eine geringere Anzahl von Schmelzklebstofffäden aufweist.

In einer Ausführungsform werden die Granulate der beiden Schmelzklebstoffe vor dem Erhitzen durchmengt und anschließend erhitzt und aufgeschmolzen.

In einer Ausführungsform beider Verfahren erfolgt das Mischen, Erhitzen und Aufschmelzen der Schmelzklebstoffe in einem Extruder.

Dies hat den Vorteil, dass nahe am Auftragsort eine sehr gute Durchmischung der Schmelzklebstoffe erreicht wird.

In einer Ausführungsform wird das aufgeschmolzene Schmelzklebstoffsystem mit einem Gas, insbesondere Stickstoff, Luft, CO₂ oder dergleichen aufgeschäumt.

In einer Ausführungsform erfolgt der Auftrag des Klebstoffes direkt anschließend nach der Durchmischung, insbesondere zur Vermeidung des Entmischens.

In einer Ausführungsform des Verfahrens erfolgt abschließend, insbesondere ohne zwischenzeitliches Abkühlen ein spurförmiger, regelmäßig oder unregelmäßig unterbrochener Auftrag auf ein flaches, insbesondere faseriges Substrat.

Dabei ist vorteilhaft, dass der Auftrag nur wenige Minuten (insbesondere 0-5 Minuten) nach dem Mischen erfolgt, um die Entmischung der Komponenten möglichst geringzuhalten.

In einer Ausführungsform erfolgt der Auftrag mittels Auftragsdüsen, die insbesondere mit Zahnradpumpen verbunden sind.

In einer Ausführungsform erfolgt der Auftrag mittels einer Breitschlitzdüse welche sich in einem Stahlrohr mit vielen Bohrungen (Größe und Anzahl abhängig vom gewünschten Kleberpunktbild) befindet durch das Stahlrohr appliziert. Mit der Größe des Rohres und der Größe der Bohrungen wird in Verbindung mit der Fördermenge des Klebstoffes die Punktgröße bzw. die Länge des Schmelzklebstoffauftrags bestimmt.

Die Erfindung betrifft ferner die Verwendung eines erfindungsgemäßen Schmelzklebstoffsystems zum fadenzugfreien Verkleben von flachen Substraten, insbesondere Filtermedien, beispielsweise Zellulosemedien, schmelzgeblasene Filtermedien, Nanofasermedien oder Kombinationen davon, insbesondere mittels regelmäßig oder unregelmäßig unterbrochener Schmelzklebstoffspuren.

In einer Ausführungsform erfolgt die Verklebung des Filterelements mit einem Schmelzklebstoffsystem, das Schmelzklebstoffsystem umfassend eine Schmelzklebstoffmischung, die Mischung umfassend 15-85 Gewichts-%, insbesondere 30-70 Gewichts-% eines ersten Schmelzklebstoffes, der Polyester basiert ist, und 15-85 Gewichts-%, insbesondere 30-70 Gewichts-% eines zweiten Schmelzklebstoffes, der Polyamid basiert ist, gelöst. Dabei soll die Summe der Bestandteile 100% der Schmelzklebstoffmischung und insbesondere 100% des Schmelzklebstoffsystems ergeben.

Dieses Schmelzklebstoffsystem hat überraschend den Vorteil, dass damit ein insbesondere regemäßig unterbrochener, spurförmiger Auftrag des Schmelzklebstoffes insbesondere mittels Auftragsdüsen auf ein Substrat ohne oder weitestgehend ohne die Bildung von Schmelzklebstofffäden möglich ist.

Die Mengenangaben zu dem ersten und dem zweiten Schmelzklebstoff sind dahingehend zu verstehen, dass sowohl der erste als auch der zweite Schmelzklebstoff wiederum aus mehreren jeweils Polyester oder Polyamid basierten Schmelzklebstoffen gebildet sein können, insbesondere um eine Feineinstellung von Materialparametern und mechanischen Eigenschaften vornehmen zu können.

In einer Ausführungsform hat die Schmelzklebstoffmischung einen Anteil von mehr als 75 Gewichts-%, bevorzugt mehr als 85 Gewichts-%, besonders bevorzugt mehr als 95 Gewichts-%, insbesondere 100 Gewichts-% an dem Schmelzklebstoffsystem, wobei der Rest aus Füllstoffen wie Kreide und/oder Pigmenten wie Titandioxid als Weißpigment und/oder einem klebrig machenden Harz (aromatische, aliphatische oder cycloaliphatische Kohlenwasserstoff-Harze oder modifizierte oder hydrierte Versionen von diesen, beispielsweise Kolophonium(-ester) oder aliphatische oder alicyclische Petroleum-Kohlenwasserstoffharze oder deren hydrierte Derivate; wie beispielsweise aus WO 2007/057059 A1 bekannt) und/oder Paraffin und/oder einem weiteren Schmelzklebstoff auf Polykondensat-Basis gebildet ist.

In einer Ausführungsform enthält das Schmelzklebstoffsystem zwischen 0-25 Gewichts-% Additive oder Füllmittel, die aus den nachfolgend genannten Additiven und Füllmitteln der Basisschmelzklebstoffe, nämlich des ersten, Polyester basierten Schmelzklebstoffes und des zweiten, Polyamid basierten Schmelzklebstoffes gewählt sein können.

In einer Ausführungsform enthält der Polyester basierte Schmelzklebstoff als Additiv ein Carbodiimid, Calciumoxid oder ein Anhydrid, insbesondere zur Verbesserung der Hydrolysebeständigkeit und/oder der Klebeeigenschaften, insbesondere in einem Gewichtsanteil von 0-5%.

In einer Ausführungsform enthält der Polyester basierte Schmelzklebstoff als Additiv ein Wachs, insbesondere Paraffin und/oder ein Oxidwachs oder ein pulverförmiges Additiv, insbesondere pyrogene Kieselsäure, insbesondere zur Beschleunigung der Kristallisation, insbesondere in einem Gewichtsanteil von 0-5%.

In einer Ausführungsform weist der Polyester basierte Schmelzklebstoff eine Dichte zwischen 1,15 und 1,35 g/cm³, bevorzugt 1,2-1,3 g/cm³, besonders bevorzugt 1,23-1,27 g/cm³ auf.

In einer Ausführungsform weist der Polyamid basierte Schmelzklebstoff eine Dichte zwischen 0,95 und 1 g/cm³, bevorzugt 0,97-0,99 g/cm³ auf.

In einer Ausführungsform weist der Polyester basierte Schmelzklebstoff eine Reißdehnung von >50%, bevorzugt >70%, besonders bevorzugt >90% auf, insbesondere gemessen nach ISO 527.

In einer Ausführungsform weist der Polyester basierte Schmelzklebstoff eine Schmelztemperatur zwischen 150°C und 170 °C, bevorzugt zwischen 150°C und 160°C auf.

In einer Ausführungsform weist der Polyamid basierte Schmelzklebstoff eine Schmelztemperatur zwischen 180°C und 210 °C auf.

In einer Ausführungsform weist der Polyamid basierte Schmelzklebstoff eine Erweichungstemperatur kleiner 188°C, bevorzugt kleiner 175°C, besonders bevorzugt kleiner 165°C auf.

In einer Ausführungsform weist der Polyamid basierte Schmelzklebstoff eine Verarbeitungstemperatur zwischen 180°C und 230°C auf.

In einer Ausführungsform ist der Polyester basierte Schmelzklebstoff aus einer Komposition von Grundstoffen, die Komposition umfassend
a. mindestens eine Säure, insbesondere Phtalsäure oder Isophtalsäure oder Terephthalsäure oder Adipinsäure oder Butandisäure oder 6-Hydroxyhexansäure oder einer Mischung aus mindestens zwei dieser Säuren, insbesondere zur Reduzierung der Kristallinität,
b. und mindestens ein Diol, insbesondere 1,2-Ethandiol oder 1,4-Butandiol oder Neopentylglycol oder 1,6-Hexandiol oder Cyclohexandimethanol oder Diethylenglykol oder einer Mischung mindestens zwei dieser Diole, insbesondere zur Reduzierung der Kristallinität,
insbesondere durch Polykondensation gebildet.

In einer Ausführungsform ist der Polyester basierte Schmelzklebstoff aus einer Komposition von Grundstoffen, die Komposition umfassend 30-50 Gewichts-%, bevorzugt 30-45 Gewichts-%, besonders bevorzugt 30-40 Gewichts-% Butandiol oder Ethandiol oder eine Mischung daraus gebildet.

In einer Ausführungsform ist der Polyester basierte Schmelzklebstoff aus einer Komposition von Grundstoffen, die Komposition umfassend >20 Gewichts-%, bevorzugt >30 Gewichts-% Terephthalsäure gebildet, insbesondere zur Reduzierung der Fadenzugneigung und/oder der Erhöhung des Schmelzpunktes.

In einer Ausführungsform ist der Polyester basierte Schmelzklebstoff aus einer Komposition von Grundstoffen, die Komposition umfassend <65 Gewichts-%, bevorzugt <45 Gewichts-%, besonders bevorzugt <35 Gewichts-% Terephthalsäure gebildet, insbesondere zur Reduzierung der Fadenzugneigung.

In einer Ausführungsform ist der Polyester basierte Schmelzklebstoff aus einer Komposition von Grundstoffen, die Komposition umfassend >10 Gewichts-%, bevorzugt >20 Gewichts-%, besonders bevorzugt >25 Gewichts-% Adipinsäure gebildet, insbesondere zur Reduzierung des Schmelzpunktes und/oder der Fadenzugneigung.

In einer Ausführungsform ist der Polyester basierte Schmelzklebstoff aus einer Komposition von Grundstoffen, die Komposition umfassend <40 Gewichts-%, bevorzugt <30 Gewichts-% Adipinsäure gebildet, insbesondere zur Reduzierung des Schmelzpunktes und/oder der Fadenzugneigung.

In einer Ausführungsform ist der Polyamid basierte Schmelzklebstoff aus einer Komposition von Grundstoffen, die Komposition umfassend und <30 Gewichts-%, bevorzugt <25 Gewichts-% Sebazinsäure gebildet, insbesondere zur Verbesserung der Wärmestandfestigkeit und/oder zur Reduzierung der Fadenzugneigung.

In einer Ausführungsform ist der Polyamid basierte Schmelzklebstoff aus einer Komposition von Grundstoffen, die Komposition umfassend
a. mindestens eine Säure, insbesondere Adipinsäure oder Azelainsäure oder Sebazinsäure oder Dimerfettsäure oder eine Mischung aus mindestens zwei dieser Säuren,
b. und mindestens ein Amin, insbesondere Ethylendiamin oder Hexaethylendiamin oder 2,2,4-Trimethylhexamethylendiamin oder ε-Caprolactam oder 1-Amino-3-aminomethyl-3,5,5-trimethylcyclohexan (Isophorondiamin) oder Piperazin oder eine Mischung aus mindestens zwei dieser Amine,
insbesondere durch Polykondensation gebildet.

In einer Ausführungsform ist der Polyamid basierte Schmelzklebstoff aus einer Komposition von Grundstoffen, die Komposition umfassend 50-90 Gewichts-%, bevorzugt 60-80 Gewichts-%, besonders bevorzugt 60-70 Gewichts-% ε-Caprolactam oder Hexamethylendiamin oder 2,2,4-Trimethylhexamethylendiamin oder einer Mischung aus mindestens zwei dieser Amine gebildet.

In einer Ausführungsform ist der Polyamid basierte Schmelzklebstoff aus einer Komposition von Grundstoffen, die Komposition umfassend >5 Gewichts-%, bevorzugt >10 Gewichts-%, besonders bevorzugt >15 Gewichts-% Adipinsäure gebildet, insbesondere zur Verbesserung der Wärmestandfestigkeit und/oder zur Reduzierung der Fadenzugneigung und/oder zur Erhöhung der Reißdehnung.

In einer Ausführungsform ist der Polyamid basierte Schmelzklebstoff aus einer Komposition von Grundstoffen, die Komposition umfassend und <30 Gewichts-%, bevorzugt <25 Gewichts-% Adipinsäure gebildet, insbesondere zur Verbesserung der Wärmestandfestigkeit und/oder zur Reduzierung der Fadenzugneigung.

In einer Ausführungsform beträgt der Gesamtanteil der Adipinsäure an den Grundstoffen des Polyamid basierten Schmelzklebstoffes und des Polyester basierten Schmelzklebstoffes >5 Gewichts-%, bevorzugt >10 Gewichts-%, besonders bevorzugt >15 Gewichts-% und gleichzeitig <35 Gewichts-%, bevorzugt <30 Gewichts-% und besonders bevorzugt <25 Gewichts-%, insbesondere zur Verbesserung der Wärmestandfestigkeit und/oder zur Reduzierung der Fadenzugneigung.

In einer Ausführungsform umfasst der Schmelzklebstoff eine Schmelzklebstoffmischung, die Mischung umfassend
a. zwischen 30 und 70 Gewichts-%, bevorzugt 45-55 Gewichts-% eines ersten Polyester basierten Schmelzklebstoffes,
b. zwischen 30 und 70 Gewichts-%, bevorzugt 45-55 Gewichts-% eines zweiten Polyamid basierten Schmelzklebstoffes.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Figuren näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
Figur 1 eine zum Verständnis der Erfindung hilfreiche Ansicht eines Filters;
Figur 2 eine zum Verständnis der Erfindung hilfreiche Ansicht eines weiteren Filters;
Figur 3 die Detailansicht einer Anordnung der Klebstoffspuren auf einem erfindungsgemäßen Filter;
Figur 4 die Detailansicht einer alternativen Anordnung der Klebstoffspuren auf einem erfindungsgemäßen Filter;
Figur 5 ein Ausführungsbeispiel des Ablaufs eines erfindungsgemäßen Verfahrens zur Herstellung eines Filterelements.

### Ausführungsform(en) der Erfindung

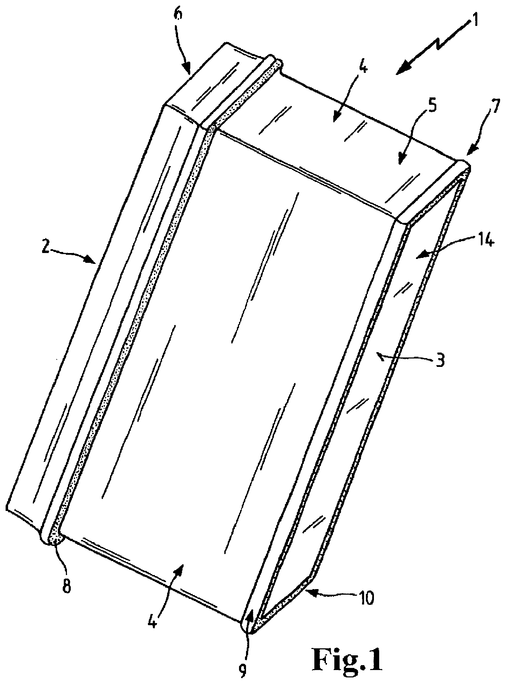

Figur 1 zeigt ein Filterelement 1 mit einer rohseitigen Anströmseite 2 und einer reinseitigen Abströmseite 3. Das Filterelement wird durch ein mehrfach gefaltetes Filtermedium 14 gebildet, wobei sich die Falten zwischen der Anströmseite und der Abströmseite erstrecken, d. h. es befinden sich jeweils Faltenspitzen auf der Anströmseite und der Abströmseite. Die nicht durchströmten Seitenflächen des Filterelements 4 sind insbesondere von einem Polyestervlies umgeben, welches auf seiner dem Filterelement zugewandten Seite mit einer Schmelzklebstoffschicht versehen ist. Diese Schmelzklebstoffschicht stellt eine flächige Verklebung des Polyestervlieses mit dem Filterelement her, wobei auch die Stirnseite 5 des Filterbalges abgedichtet wird. Das Filterelement 1 umfasst einen Hauptrahmen 6 und einen Hilfsrahmen 7, wobei der Hauptrahmen eine axiale Dichtung 8 trägt, welche in Richtung der Abströmseite 3 dichtet und in eine Nut des Hauptrahmens oder in eine Nut zwischen Hauptrahmen und Seitenflächen 4 eingebracht ist. Der Hilfsrahmen ist mit den Seitenflächen 4 durch eine Klebeverbindung verbunden und weist radiale Flächen 9 und axiale Flächen 10 zur Abstützung des Filterelements in einem nicht dargestellten Gehäuse auf.

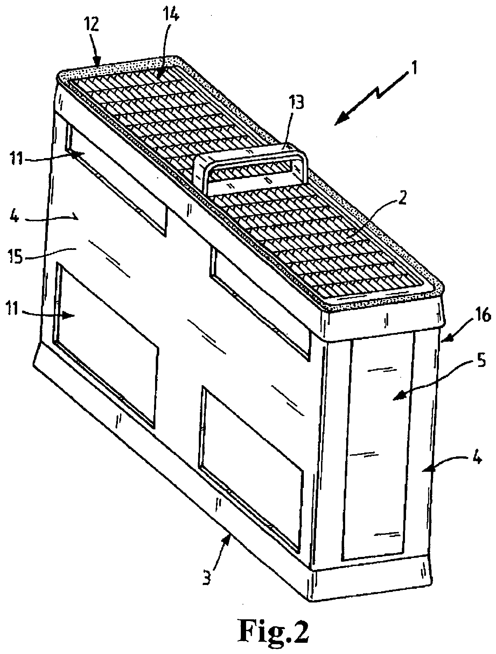

Figur 2 zeigt eine Ausführungsform eines Filterelements 1 mit einer rohseitigen Anströmseite 2 und einer reinseitigen Abströmseite 3. Auf den nicht durchströmten Seitenflächen 4 des Filtermediums 14 ist ein Kunststoffrahmen 16 mittels einer Schmelzklebstoffverbindung aufgebracht, wobei auf den Stirnseiten 5 durch den Schmelzklebstoff auch die Abdichtung der Stirnseite erfolgt. Auf den Endseiten 15 sind Öffnungen in den Kunststoffrahmen 16 eingebracht. Der Kunststoffrahmen 16 trägt auf der Anströmseite 2 eine axiale Dichtung 12, welche mit einer Dichtfläche eines nicht gezeigten Gehäuses in Eingriff bringbar ist. Ferner ist ein Griff 13 vorgesehen, welcher mit dem Kunststoffrahmen 16 in Verbindung steht und zur besseren Handhabung des Filterelements 1 dient.

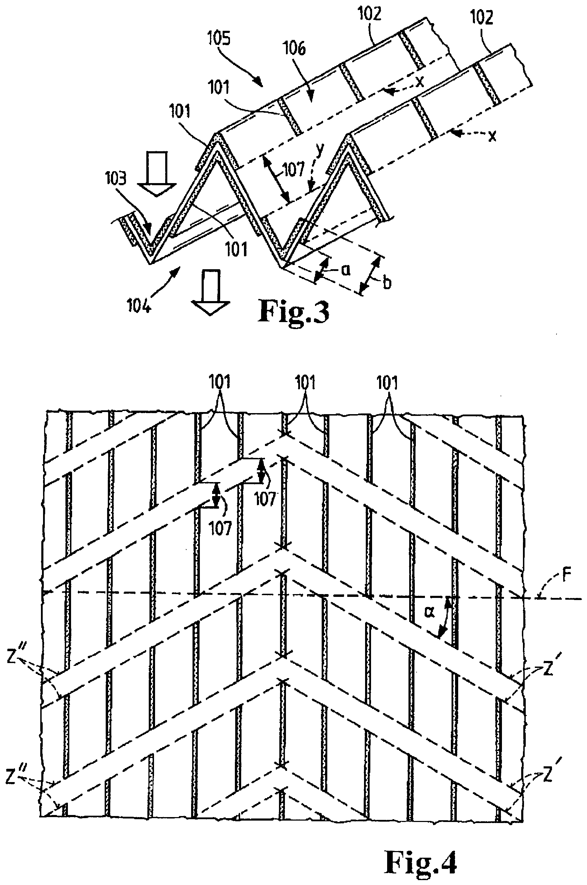

Figur 3 zeigt die Detailansicht einer Anordnung der Klebstoffspuren auf einem erfindungsgemäßen Filterelement. In dieser Ausführungsform sind in die Falten Klebstoffspuren 101 insbesondere aus dem erfindungsgemäßen Schmelzklebstoff eingebracht, welche sich zwischen Faltenspitzen 102 und Faltengrund 103 erstrecken. Dabei sind sowohl auf der Reinseite 104 als auch auf der Rohseite 105 Klebstoffspuren 101 eingebracht. Es werden dabei vor dem Aufstellen der einzelnen Falten mindestens zwei insbesondere durchgehende Klebstoffspuren 101 zueinander parallel und senkrecht zu der Richtung der Faltkanten 102, 103 auf das Filtermedium 106 aufgebracht. Die insbesondere ansonsten durchgehenden Klebstoffspuren 101 sind in insbesondere regelmäßigen Abständen durch eine Unterbrechung 107 unterbrochen. Auf der Rohseite 105 ist die Klebstoffspur einmal zwischen Faltenspitze und Faltengrund unterbrochen. Die Unterbrechung 107 befindet sich dabei mittig zwischen Faltenspitze und Faltengrund und entspricht in ihrer Länge zwischen einem Drittel und der Hälfte der Faltenhöhe. Die Unterbrechung 107 beginnt in einem Abstand b vom rohseitigen Faltengrund 103. Damit werden die Falten rohseitig nur im Bereich des Faltengrundes und der Faltenspitzen verklebt. Reinseitig ist eine Unterbrechung der Klebstoffspur über eine Länge a vorgesehen, welche die Rohseitige Faltenspitze umgibt. Somit sind die Falten rohseitig im Bereich der Faltenspitzen nicht verklebt.

Die Abstände a und b von rohseitigem Faltengrund und reinseitiger Faltenspitze sind so ausgebildet, dass sich die Unterbrechung 107 der reinseitigen und der rohseitigen Klebstoffspur nicht überschneiden. Damit ist sichergestellt, dass sowohl im Bereich der reinseitigen Faltenspitzen als auch in der Nähe des reinseitigen Faltengrundes eine Überlappung der reinseitigen 104 und rohseitigen 105 Klebstoffspur 101 gebildet ist.

Die durch die Anfangs- und Endpunkte der einzelnen Klebstoffspurenabschnitte gebildeten Geraden x und y verlaufen parallel zu den Faltkanten.

Figur 4 zeigt eine alternative Anordnung der insbesondere mit dem erfindungsgemäßen Schmelzklebstoff gebildeten Klebstoffspuren auf einem erfindungsgemäßen Filterelement. In dieser Ausführungsform sind die Anfangs- und Endpunkte der Unterbrechungen der Klebstoffspuren 101 an einer Mehrzahl von Geraden z ausgerichtet, welche zueinander parallel verlaufen und mit den Faltkanten F einen Winkel α von 10-80°, bevorzugt 45 +/-15° bilden. Dabei verlaufen die Anfangs- und Endpunkte der Unterbrechungen der Klebstoffspuren an mindestens zwei Geradenscharen z' und z", wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen 107 der Klebstoffspur 101 auf dem Filtermedium gebildet wird.

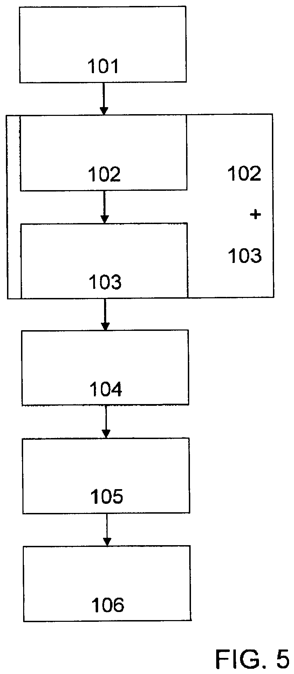

In Figur 5 ist ein Ausführungsbeispiel des Ablaufs eines erfindungsgemäßen Verfahrens zur Herstellung eines Schmelzklebstoffsystems gezeigt.

Das Verfahren zur Herstellung des erfindungsgemäßen Filterelements umfasst in dieser Ausführungsform die Schritte:
(101) Durchmengen der Granulate der beiden Schmelzklebstoffe vor dem Erhitzen,
(102) Aufschmelzen des ersten Schmelzklebstoffes, der Polyester basiert ist, und des zweiten Schmelzklebstoffes, der Polyamid basiert ist, in erfindungsgemäßer Zusammensetzung und erfindungsgemäßem Mengenverhältnis, beispielsweise in einem Tankschmelzgerät,
(103) insbesondere dynamisches Mischen der beiden Schmelzklebstoffe, insbesondere unter Erzeugung von Scherkräften in der Schmelze zu einer Schmelzklebstoffmischung, beispielsweise mit einem Rührwerk oder einem Förderwerk mit Förderschnecken oder Zahnrädern, wobei die Schritte 102 und 103 jedoch vorzugsweise gleichzeitig als Schritt (102+103) in einem Extruder durchgeführt werden,
(104) fakultatives Aufschäumen des aufgeschmolzenen Schmelzklebstoffsystems mit einem Gas, insbesondere Stickstoff, Luft, CO₂ oder dergleichen,
(105) Applikation der geschmolzenen Schmelzklebstoffmischung auf ein bahnförmiges Filtermedium in mindestens einer insbesondere regelmäßig oder unregelmäßig unterbrochenen Klebstoffspur, insbesondere ohne zwischenzeitliches Abkühlen, insbesondere nur 0-5 Minuten nach dem Mischen,
(106) Falten des Filtermediums unter gleichzeitigem Verkleben der Falten durch die applizierte Schmelzklebstoffmischung.

Die nachfolgenden Beispiele zeigen für ein erfindungsgemäßes Filterelement verwendete oder zum Vergleich herangezogene Schmelzklebstoffsysteme auf.

### Beispiel 1

Ein Polyester-Schmelzklebstoff (Sika SikaMelt 9120) mit einer Dichte von 1,25 g/cm³ und einer Reißdehnung von im Bereich von 75-115 % und ein Polyamid-Schmelzklebstoff (Henkel Marcomet 6208) mit einer Dichte von 0,98 g/cm³ werden jeweils separat unter Mischen auf Verarbeitungstemperatur (200°C) erwärmt. Die Fadenzugneigung wird qualitativ derart ermittelt, dass ein 1 mm dicker Metallrundstab in die Schmelze getaucht und ruckartig herausgezogen wird. Bei Beispiel 1 verbleibt bei beiden Schmelzklebstoffen ein Schmelzklebstofftropfen an dem Metallrundstab, an welchem sich direkt beim Herausziehen aus der Schmelze ein Schmelzklebstofffaden verbleibt, der auskühlt und aushärtet. Ein verbleibender, verfestigter Faden ist erkennbar. Die Fadenzugneigung wird deshalb als hoch beurteilt. Ferner wird das Granulat der beiden genannten Schmelzklebstoffe gemischt und das durchmischte Granulat auf 200°C erhitzt und gemeinsam aufgeschmolzen. Sofort danach erfolgt, um die Entmischung gering zu halten, ein Auftrag mittels einer direkt mit einer Zahnradpumpe gekoppelten Auftragsdüse auf ein flaches Filtermedium. Dabei ist überraschend eine geringere Bildung von Fäden als bei der Verwendung der beiden Schmelzklebstoffe in separater Form festzustellen. Auch wird die Fadenzugneigung der Schmelzklebstoffmischung qualitativ beurteilt, derart, dass ein 1 mm dicker Metallrundstab in die vorher nochmals in einer auf Bearbeitungstemperatur erwärmten Porzellanschale dynamisch vermischte Schmelze getaucht und ruckartig herausgezogen wird. Es verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 2

Es werden in gleichen Gewichtsanteilen ein Polyesterschmelzklebstoff mit einem Schmelzpunkt bei 150-160°C, im Wesentlichen gebildet aus 40 Gewichts-% Butandiol, 33 Gewichts-% Terephthalsäure, 27 Gewichts-% Adipinsäure und ein Polyamidschmelzklebstoff mit einem Schmelzpunkt bei 130°C, gebildet aus 67 Gewichts-% ε-Caprolactam, 5 Gewichts-% 2,2,4 Trimethylhexamethylendiamin, 12 Gewichts-% 1-Amino-3-aminomethyl-3,5,5-trimethylcyclohexan und 16 Gewichts-% Adipinsäure in Granulatform durchmischt und gemeinsam unter dynamischem Mischen aufgeschmolzen. Die Fadenzugneigung wird qualitativ derart ermittelt, dass ein 1 mm dicker Metallrundstab in die Schmelze getaucht und ruckartig herausgezogen wird. Bei Beispiel 2 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 3

Der Polyesterschmelzklebstoff (Sika Sikamelt 9420) mit einer Reißdehnung von ca. 50-60% wird in Gewichtsanteilen 60:40, 65:35, 70:30 (der Polyesterschmelzklebstoff jeweils erstgenannt) mit einem Polyamidschmelzklebstoff (Henkel Macromet 6208) mit einer Schmelztemperatur zwischen 188 und 195°C und einer Dichte von 1,02 g/cm³ wie in Beispiel 1 vermischt und auf Fadenzugneigung überprüft.

Bei Beispiel 3 verbleibt ein Schmelzklebstofftropfen an dem Metallrundstab, in welchen sich der direkt nach dem Herausziehen des Metallrundstabes aus der Schmelze gebildete Faden je nach Mischungsverhältnis vollständig oder teilweise zurückzieht. Der Effekt ist dabei deutlich geringer ausgeprägt als bei der Applikation der beiden Schmelzklebstoffe in separater Verwendung.

### Beispiel 4

Der Polyesterschmelzklebstoff aus Beispiel 2 und ein Polyamidschmelzklebstoff mit einer Dichte von 0,97 g/cm³, einem Erweichungspunkt von 190-205 °C (Henkel Macromet 2035) werden zu Gewichtsanteilen 30:70, 50:50 und 70:30 analog Beispiel 1 gemischt und geprüft. Bei Beispiel 4 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar oder deutlich kleiner ausgeprägt als bei der Applikation der beiden Schmelzklebstoffe in separater Verwendung wobei ab einem Gewichtsanteil von 70% des genannten Polyesterklebstoffes die Fadenzugneigung wieder zunimmt. Die Fadenzugneigung wird deshalb als gering beurteilt.

## Patentansprüche

1. Filterelement, umfassend einen zickzackförmig gefalteten, aus einem flachen Filtermedium gebildeten Filterbalg, wobei der Filterbalg durch mindestens zwei insbesondere regelmäßig oder unregelmäßig unterbrochene Klebstoffspuren aus einem Schmelzklebstoffsystem, die auf dem Filtermedium verlaufen, verklebt ist, wobei das Schmelzklebstoffsystem eine Schmelzklebstoffmischung umfasst, die Schmelzklebstoffmischung umfassend 15-85 Gewichts-%, insbesondere 30-70 Gewichts-%, eines ersten Schmelzklebstoffes, der Polyester basiert ist, und 15-85 Gewichts-%, insbesondere 30-70 Gewichts-%, eines zweiten Schmelzklebstoffes, der Polyamid basiert ist, wobei die Gewichtsanteile des ersten und des zweiten Schmelzklebstoffes zusammen 100 Gewichts-% der Schmelzklebstoffmischung ergeben, wobei die Schmelzklebstoffmischung einen Anteil von mehr als 75 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist.

2. Filterelement nach Anspruch 1, umfassend ein zickzackförmig gefaltetes Filtermedium, welches eine Rohseite von einer Reinseite trennt und abwechselnd Faltenspitzen und Faltengründe aufweist, wobei in den Faltenzwischenräumen Schmelzklebstoffspuren angeordnet sind, welche sich alternierend zwischen Faltenspitzen und Faltengründen erstrecken, wobei sowohl auf der Rohseite als auch auf der Reinseite des Filtermediums jeweils mindestens zwei Klebstoffspuren zueinander parallel und insbesondere senkrecht zu der Richtung der Faltkanten auf dem Filterelement angeordnet sind, wobei die Klebstoffspuren auf der Rohseite und/oder der Reinseite in regelmäßigen Abständen unterbrochen sind, wobei die Anfangs- und Endpunkte der Unterbrechungen der Klebstoffspuren an einer Mehrzahl von Geraden ausgerichtet ist.

3. Filterelement nach Anspruch 2, **dadurch gekennzeichnet, dass** die Mehrzahl von Geraden parallel zu den Faltkanten verlaufen.

4. Filterelement nach Anspruch 2, **dadurch gekennzeichnet, dass** die Mehrzahl von Geraden zueinander parallel verlaufen und mit den Faltkanten einen Winkel von 10-80°, bevorzugt 45 +/-15° bilden.

5. Filterelement nach einem der vorhergehenden Ansprüche, **dadurch gekennzeichnet, dass** die Klebstoffspuren reinseitig eine Unterbrechung der Klebstoffspur aufweisen, welche die reinseitige Faltenspitze umgibt.

6. Filterelement nach einem der vorhergehenden Ansprüche, **dadurch gekennzeichnet, dass** mindestens eine, bevorzugt alle Klebstoffspuren auf der Rohseite einer/den Klebstoffspur(en) auf der Reinseite direkt gegenüber liegen.

7. Filterelement nach einem der vorhergehenden Ansprüche, **dadurch gekennzeichnet, dass** sich die Unterbrechungen der Klebstoffspuren auf der Rohseite und der Reinseite nicht überschneiden.

8. Filterelement nach einem der vorhergehenden Ansprüche, **dadurch gekennzeichnet, dass** die Anfangs- und Endpunkte der Unterbrechungen der Klebstoffspuren an mindestens zwei Geradenscharen verlaufen, wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen der Klebstoffspur auf dem Filtermedium gebildet wird.

9. Filterelement nach einem der vorhergehenden Ansprüche, **dadurch gekennzeichnet, dass** die Anfangs- und Endpunkte der Unterbrechungen der Klebstoffspuren anstatt durch Geradenscharen durch Kurvenscharen definiert werden, wobei die Kurven insbesondere dieselbe Form haben, jedoch in einer Richtung senkrecht (+/- 30°) zu den Faltkanten zueinander verschoben sind.

10. Filterelement nach einem der vorhergehenden Ansprüche, **dadurch gekennzeichnet, dass** die Kurvenschar Kreis- oder Ellipsenabschnitte, Sinusformen oder sonstige regelmäßige Schwingungsformen umfasst.

11. Filterelement nach einem der vorhergehenden Ansprüche, **dadurch gekennzeichnet, dass** der Abstand zwischen zwei aufeinanderfolgenden Unterbrechungen, d.h. die Länge eines durchgehenden Klebstoffspurabschnitts länger ist als mindestens eine, bevorzugt beide anschließenden Unterbrechungen.

12. Filterelement nach einem der vorhergehenden Ansprüchen, wobei der Gesamtanteil der Adipinsäure an den Grundstoffen des ersten Schmelzklebstoffes, der Polyester basiert ist, und des zweiten Schmelzklebstoffes, der Polyamid basiert ist, >5 Gewichts-%, bevorzugt >10 Gewichts-%, besonders bevorzugt >15 Gewichts-% und gleichzeitig <35 Gewichts-%, bevorzugt <30 Gewichts-% und besonders bevorzugt <25 Gewichts-% beträgt.

13. Verfahren zur Herstellung eines Filterelementes gemäß Anspruch 1, das Verfahren umfassend die Schritte:
a. Aufschmelzen einer ersten Schmelzklebstoffmischung, die Schmelzklebstoffmischung umfassend
i. 15-85 Gewichts-% eines ersten Schmelzklebstoffes, der Polyester basiert ist,
ii. 15-85 Gewichts-% eines zweiten Schmelzklebstoffes, der Polyamid basiert ist, wobei die Gewichtsanteile des ersten und des zweiten Schmelzklebstoffes zusammen 100 Gewichts-% der Schmelzklebstoffmischung ergeben, wobei die Schmelzklebstoffmischung einen Anteil von mehr als 75 Gewichts-% an einem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist,
b. insbesondere dynamisches Mischen der beiden Schmelzklebstoffe, insbesondere unter Erzeugung von Scherkräften in der Schmelze,
c. Applikation des Schmelzklebstoffsystems auf ein bahnförmiges Filtermedium in insbesondere regelmäßig oder unregelmäßig unterbrochenen Klebstoffspuren,
d. Falten des Filtermediums unter gleichzeitigem Verkleben der Falten durch das applizierte Schmelzklebstoffsystem.

14. Verfahren nach dem vorhergehenden Anspruch, **dadurch gekennzeichnet, dass** die Granulate der beiden Schmelzklebstoffe vor dem Erhitzen durchmengt und anschließend erhitzt und aufgeschmolzen werden.

15. Verfahren nach einem der beiden vorhergehenden Ansprüche, **dadurch gekennzeichnet, dass** das Mischen, Erhitzen und Aufschmelzen in einem Extruder erfolgt.

## Claims

1. Filter element, comprising a zigzag-folded filter bellows made of a flat filter medium, wherein the filter bellows is glued by means of at least two in particular regularly or irregularly interrupted adhesive lines of a hot-melt adhesive system which extend on the filter medium, wherein the hot-melt adhesive system comprises a hot-melt adhesive mixture, the hot-melt adhesive mixture comprising 15-85 % by weight, in particular 30-70 % by weight, of a first hot-melt adhesive which is polyester-based, and 15-85 % by weight, in particular 30-70 % by weight, of a second hot-melt adhesive which is polyamide-based, wherein the parts by weight of the first and the second hot-melt adhesive in combination result in 100 % by weight of the hot-melt adhesive mixture, wherein the hot-melt adhesive mixture has a proportion of more than 75 % by weight of the hot-melt adhesive system, wherein the remaining part is made of filling material such as chalk and/or pigments such as titanium dioxide as white pigment and/or a tackifying resin and/or at least one further hot-melt adhesive on polycondensate base.

2. Filter element according to claim 1, comprising a zigzag-folded filter medium which separates a raw side from a clean side and features alternatingly fold tips and fold bases, wherein melt adhesive lines are disposed in the intermediate fold spaces which extend alternatingly between fold tips and fold bases, wherein on the raw side as well as on the clean side of the filter medium at least two adhesive lines, respectively, are disposed parallel to each other and in particular perpendicularly to the direction of the fold edges on the filter element, wherein the adhesive lines are interrupted at regular spacings on the raw side and/or on the clean side, wherein the starting and end points of the interruptions of the adhesive lines are aligned with a plurality of straight lines.

3. Filter element according to claim 2, **characterized in that** the plurality of straight lines extend parallel to the fold edges.

4. Filter element according to claim 2, **characterized in that** the plurality of straight lines extend parallel to each other and form with the fold edges an angle of 10-80°, preferably 45 +/-15°.

5. Filter element according to one of the above claims, **characterized in that** the adhesive lines feature on the clean side an interruption of the adhesive line that surrounds the fold tip on the clean side.

6. Filter element according to one of the above claims, **characterized in that** at least one, preferably all adhesive lines on the raw side are positioned directly opposite to one/to the adhesive line(s) on the clean side.

7. Filter element according to one of the above claims, **characterized in that** the interruptions of the adhesive lines on the raw side and on the clean side do not overlap.

8. Filter element according to one of the above claims, **characterized in that** the starting and end points of the interruptions of the adhesive lines extend on at least two sets of straight lines, wherein each set of straight lines comprises straight lines parallel to each other, wherein the corresponding straight lines on the filter medium cross each other so that an arrow-shaped or zigzagshaped extension of the interruptions of the adhesive line is formed on the filter medium.

9. Filter element according to one of the above claims, **characterized in that** the starting and end points of the interruptions of the adhesive lines are defined by a set of curves instead by a set of straight lines, wherein the curves have in particular the same shape, but are displaced relative to each other in a direction perpendicular (+/- 30°) to the fold edges.

10. Filter element according to one of the above claims, **characterized in that** the set of curves comprises circle or ellipsis sections, sine shapes or other regular oscillation shapes.

11. Filter element according to one of the above claims, **characterized in that** the distance between two consecutive interruptions, i.e. the length of an end-to-end adhesive line section, is longer than as at least one, preferably both adjoining interruptions.

12. Filter element according to one of the above claims, wherein the total percentage of the adipic acid in the basic materials of the the first hot-melt adhesive which is polyester-based, and the second hot-melt adhesive which is polyamide-based, amounts to >5 % by weight, preferably >10 % by weight, particularly preferred >15 % by weight and at the same time <35 % by weight, preferably <30 % by weight and particularly preferred <25 % by weight.

13. Method for manufacturing a filter element according to claim 1, the method comprising the steps:
a. Melting a hot-melt adhesive mixture, the hot-melt adhesive mixture comprising
I. 15-85 % by weight of a first hot-melt adhesive which is polyester-based,
II. 15-85 % by weight of a second hot-melt adhesive which polyamide-based, wherein the parts by weight of the first and the second hot-melt adhesive in combination result in 100 % by weight of the hot-melt adhesive mixture, wherein the hot-melt adhesive mixture has a proportion of more than 75 % by weight of a hot-melt adhesive system, wherein the remaining part is made of filling material such as chalk and/or pigments such as titanium dioxide as white pigment and/or a tackifying resin and/or at least one further hot-melt adhesive on polycondensate base,
b. in particular dynamic mixing of both hot-melt adhesives, in particular by generating shear forces in the melt, to generate a hot-melt adhesive mixture,
c. application of the hot-melt adhesive system to a web-shaped filter medium in in particular regularly or irregularly interrupted adhesive lines,
d. folding of the filter medium by simultaneously gluing the folds by means of the applied hot-melt adhesive system.

14. Method according to the above claim, **characterized in that** the granulates of the two hot-melt adhesives are mixed before heating and then heated and melted.

15. Method according to one of the two above claims, **characterized in that** the mixing, heating and melting is done in an extruder.

## Revendications

1. Élément filtrant, comprenant un soufflet de filtre plié en accordéon et constitué d'un milieu filtrant plat, le soufflet de filtre étant collé par au moins deux cordons de colle, issus d'un système de colles thermofusibles, en particulier interrompus de façon régulière ou irrégulière qui s'étendent sur le milieu filtrant, le système de colles thermofusibles comprenant un mélange de colles thermofusibles, lequel comprend 15 à 85 % en poids, notamment 30 à 70 % en poids d'une première colle thermofusible à base de polyester et 15 à 85 % en poids, notamment 30 à 70 % en poids d'une deuxième colle thermofusible à base de polyamide, les pourcentages en poids de la première colle thermofusible et de la deuxième colle thermofusible donnant, par addition, 100 % en poids du mélange de colles thermofusibles, le mélange de colles thermofusibles représentant une part de plus de 75 % en poids du système de colles thermofusibles, le reste étant constitué de charges telles que de la craie et/ou des pigments comme de l'oxyde de titane en tant que pigment blanc et/ou une résine collante, et/ou d'au moins une autre colle thermofusible à base de polycondensat.

2. Élément filtrant selon la revendication 1, comprenant un milieu filtrant plié en accordéon qui sépare un côté brut d'un côté pur et qui présente en alternance des crêtes de pli et des creux de pli, des cordons de colle thermofusible étant disposés dans les interstices de pliage, ces cordons de colle s'étendant en alternance entre les crêtes de pli et les creux de pli, respectivement au moins deux cordons de colle étant disposés sur l'élément filtrant, aussi bien du côté brut que du côté pur du milieu filtrant, parallèlement l'un par rapport à l'autre et en particulier verticalement au sens des bords de pliage, les cordons de colle étant interrompus à des distances régulières du côté brut et/ou du côté pur, les points de départ et les points finaux des interruptions des cordons de colle étant alignés sur de multiples lignes droites.

3. Élément filtrant selon la revendication 2, **caractérisé en ce que** les multiples lignes droites sont parallèles aux bords de pliage.

4. Élément filtrant selon la revendication 2, **caractérisé en ce que** les multiples lignes droites sont parallèles les unes aux autres et forment, avec les bords de pliage, un angle de 10 à 80°, de préférence de 45 +/-15°.

5. Élément filtrant selon l'une des revendications précédentes, **caractérisé en ce que** les cordons de colle présentent du côté pur une interruption du cordon de colle qui entoure la crête de pli du côté pur.

6. Élément filtrant selon l'une des revendications précédentes, **caractérisé en ce qu**'au moins un cordon de colle, et de préférence tous les cordons de colle, se situent du côté brut directement en face d'un cordon de colle ou des cordons de colle du côté pur.

7. Élément filtrant selon l'une des revendications précédentes, **caractérisé en ce que** les interruptions des cordons de colle du côté brut et du côté pur ne se chevauchent pas.

8. Élément filtrant selon l'une des revendications précédentes, **caractérisé en ce que** les points de départ et les points finaux des interruptions des cordons de colle s'étendent sur au moins deux familles de lignes droites, chaque famille de lignes droites comprenant des lignes droites parallèles les unes aux autres, les lignes correspondantes sur le milieu filtrant se coupant et réalisant ainsi un agencement en forme de flèche ou en accordéon des interruptions du cordon de colle sur le milieu filtrant.

9. Élément filtrant selon l'une des revendications précédentes, **caractérisé en ce que** les points de départ et les points finaux des interruptions des cordons de colle ne sont pas définis par des familles de lignes droites mais par des familles de courbes, les courbes ayant en particulier la même forme mais étant décalées les unes par rapport aux autres, dans une direction, en sens vertical (+/- 30°) par rapport aux bords de pliage.

10. Élément filtrant selon l'une des revendications précédentes, **caractérisé en ce que** la famille de courbes comprend des sections de cercles ou d'ellipses, des formes sinusoïdales ou d'autres formes courbées régulières.

11. Élément filtrant selon l'une des revendications précédentes, **caractérisé en ce que** la distance entre deux interruptions consécutives, c'est-à-dire la longueur d'une section continue de cordon de colle est plus grande que celle d'au moins une interruption, de préférence de deux interruptions adjacentes.

12. Élément filtrant selon l'une des revendications précédentes, le pourcentage global d'acide adipique dans les substances de base de la première colle thermofusible à base de polyester et de la deuxième colle thermofusible à base de polyamide correspondant à > 5 % en poids, de préférence à > 10 % en poids, et plus spécialement à > 15 % en poids, et en même temps à < 35 % en poids, de préférence à < 30 % en poids, et plus spécialement à < 25 % en poids.

13. Procédé de fabrication d'un élément filtrant selon la revendication 1, ce procédé comprenant les étapes suivantes :
a. fusion d'un mélange de colles thermofusibles, ce mélange de colles thermofusibles comprenant
I. 15 à 85 % en poids d'une première colle thermofusible à base de polyester,
II. 15 à 85 % en poids d'une deuxième colle thermofusible à base de polyamide, les pourcentages en poids de la première colle thermofusible et de la deuxième colle thermofusible donnant, par addition, 100 % en poids du mélange de colles thermofusibles, le mélange de colles thermofusibles représentant une part de plus de 75 % en poids d'un système de colles thermofusibles, le reste étant constitué de charges telles que de la craie et/ou des pigments comme de l'oxyde de titane en tant que pigment blanc et/ou une résine collante, et/ou d'au moins une autre colle thermofusible à base de polycondensat,
b. mélange essentiellement dynamique des deux colles thermofusibles, en particulier avec génération de forces de cisaillement dans la masse fondue, afin de constituer un mélange de colles thermofusibles,
c. application du système de colles thermofusibles sur un milieu filtrant en forme de bande, en cordons de colle interrompus en particulier de façon régulière ou irrégulière,
d. pliage du milieu filtrant et collage simultané des plis avec le système de colles thermofusibles appliqué.

14. Procédé selon la revendication précédente, **caractérisé en ce que** les granulés des deux colles thermofusibles sont mélangés avant le chauffage, puis sont chauffés et fondus.

15. Procédé selon l'une des deux revendications précédentes, **caractérisé en ce que** le mélange, le chauffage et la fusion sont réalisés dans une extrudeuse.
